Europäisches Patentamt

European Patent Office

Office européen des brevets

(11) Publication number: **0 416 791 A2**

# EUROPEAN PATENT APPLICATION

(21) Application number: 90309332.6

(22) Date of filing: 24.08.90

(51) Int. Cl.⁵: **B29C 33/08**, B29C 43/52

(30) Priority: 08.09.89 US 404470

(43) Date of publication of application:
13.03.91 Bulletin 91/11

(84) Designated Contracting States:
DE FR GB

(71) Applicant: **GENERAL MOTORS CORPORATION**
**General Motors Building 3044 West Grand**
**Boulevard**
**Detroit Michigan 48202(US)**

(72) Inventor: **Malaczynski, Gerard Wladyslaw**
**1183 Ashover Drive**
**Bloomfield Hills, MI 48013(US)**
Inventor: **Natale, Claude Anthony Di**
**330 Lothrop Road**
**Grosse Pointe Farms, MI 48236(US)**

(74) Representative: **Haines, Arthur Donald et al**
**Patent Section Vauxhall Motors Limited 1st**
**Floor Gideon House 26 Chapel Street**
**Luton, Bedfordshire LU1 2SE(GB)**

(54) Method and apparatus for compression moulding with dielectric heating.

(57) A compression mould for polymer parts has telescoping mould parts (10,20) with a dielectric shear edge (16) for electrical isolation of the mould parts (10,20) and an RF source (22) is connected across the mould parts (10,20) to provide dielectric heating to the charge in the mould cavity (18). By charging the mould cavity (18) with thermoplastic or thermosetting resin, preferably re-inforced with a fibre roving, and applying an RF field to the mould parts (10,20), the charge is heated rapidly and uniformly. The mould is also heated either conventionally or by including a lossy dielectric material on the mould face for heating by the RF field. Multiple mould cavities may also be used.

FIG 2

# METHOD AND APPARATUS FOR COMPRESSION MOULDING WITH DIELECTRIC HEATING

This invention relates to compression moulding methods and apparatus and particularly to such a method and apparatus which is dielectrically heats polymer materials whilst under pressure as specified in the preamble of claim 1, for example as disclosed in EP-A-0 233 846.

The manufacture of polymer materials including composites is a major industry requiring expensive equipment. Conventional moulding practices call for heating a thermosetting resin, often combined with reinforcing fibres, by compressing a charge of uncured material in a mould, heating the mould to heat the charge by thermal diffusion to start an exothermic reaction in the resin and maintaining the pressure until the reaction is completed to cure the resin and further to cool the resin. A cycle time of half an hour or more is needed for the moulding of a large part. Thus any large volume of production would require enormous capital expenditure for equipment and factory space.

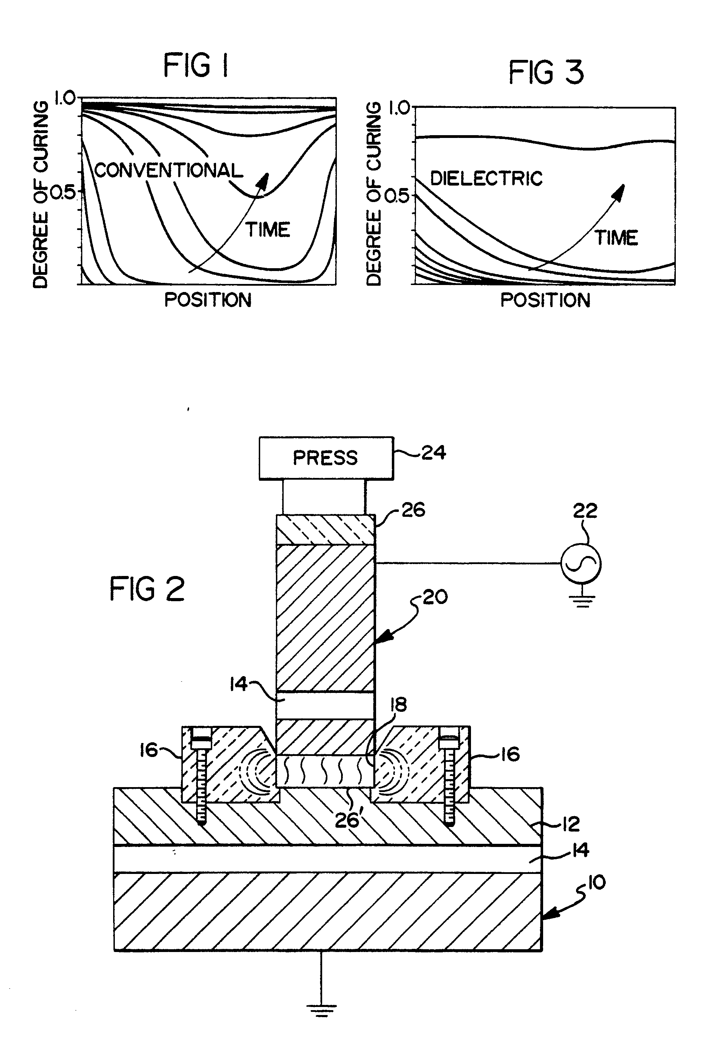

The existing technique for compression moulding based on diffusive heat exchange between a heat source and a workpiece to be thermo-cured appears to be satisfactory when applied to a thick, poor heat-conducting composite layer. Relying exclusively on thermal conduction means not only that the curing process becomes prohibitively slow when a profile of cured material reached certain dimensions, but also leads to strongly non-uniform temperature distribution during the entire manufacturing process. As a result, the curing process develops with different rates at different locations within the cross-section of the workpiece. The heat released in the chemical reaction contributes to an even more non-homogeneous temperature distribution. Consequently, the composite starts to cure close to the hot mould surface and a "curing wave" gradually propagates into the bulk of the material. This is illustrated in Figure 1 which graphically illustrates the degree of cure in a large part heated by a mould versus the depth in workpiece, the right-hand boundary of the graph representing the upper half of the mould and the left-hand boundary of the graph representing the mandrel or cavity half of the mould. Each line in the graph shows the degree of cure at a particular time. One can expect, therefore, that the inner portion of the material remains liquid whilst the external part solidifies. As the chemical reaction proceeds, the outer portion of the workpiece remains at the temperature level of the mould whilst the still-reacting centre portion releases the heat of chemical origin resulting eventually in a temperature inversion within the workpiece. A peak temperature developed at the composite centre translates to a mechanical pressure acting outwardly on the work piece and may lead to composite micro-cracks, if not complete self-destruction, when the work piece is discharged from the mould cavity. Obviously, extended residence of the already cured workpiece in the mould cavity could assure better quality of the product but that would extend an already prohibitively long processing time.

Dielectric heating of the workpiece in the mould is here proposed to overcome the problems just described. The part is heated throughout its volume quickly and relatively uniformly to avoid the temperature extremes in the cured part as well as to speed up the heating and curing process. Whilst dielectric heating has been already proposed, problems have remained which prior to this invention, have prevented successful use of that process.

US-A-4,134,942 (Mirr et al) discloses a method for producing foamed articles using dielectric heating of the foamed material. The mould described therein has two mould parts made of epoxy resin with metal electrodes embedded in the mould parts close to the moulding surface thereof. The mould parts seat together along a mating plane when the mould is closed to form a cavity containing foaming material. The electrodes are insulated from each other and are coupled to a radio frequency generator to heat the foaming material. Any pressure in the mould is derived from a chemical reaction in the material. That is, the mould does not apply pressure but merely contains the pressure of the foaming material. There is no disclosure of a mould suitable for compression moulding.

US-A-4,423,191 (Haven et al) discloses a radio-frequency electric field to heat and cure re-inforced thermoset composite articles. The disclosed mould is an outer hollow member of dielectric material having very low dielectric loss, two opposed aluminium plugs movable within the outer member to compress a resin charge between the plugs, O-rings to seal the interface of the plugs and the outer member, and PTFE discs separating and thermally insulating the plugs from the charge. Mould compensation is used to provide uniform heating to an article of non-uniform thickness, i.e., electrodes are uniformly spaced and dielectric material of very low loss tangent is placed between the electrodes and the cavity and is shaped to assure a uniform field in the cavity.

US-A-4,659,071 (Woltron) discloses a process for making a leaf spring from fibre rovings impregnated with epoxy resin material and heating the material in a press mould by a high-frequency electrical field. The mould comprises two halves of dielectric material having the press surfaces covered by metal layers serving as electrodes for connection to a generator. The mould halves seat in a mating plane, as in US-A-4,134,942, to contain the charge. Any voids in the charge are filled by feeding in liquid plastics material through a feeder duct in the mould. There is no disclosure of a mould suitable for compression moulding.

An apparatus for compressing and curing a resin object according to the present invention is characterised by the features specified in the characterising portion of claim 1.

It is therefore an object of the invention to provide a mould for compression moulding of polymer and composite parts with dielectric heating. It is a particular objective to provide such a mould of rugged structure suitable for high volume production use for moulding large parts.

It is another object of the invention to provide a method of compression moulding polymer or polymer composite parts with dielectric heating.

The invention is carried out by means for compressing and curing a resin object comprising: a pair of co-operating mould parts for imparting a shape to a body of material to form the object, each mould part including a conductive portion to serve as an electrode, at least one of the mould parts having a shear edge comprising a dielectric material, whereby the mould parts can have close contact with one another and maintain electrical isolation of the conductive portions, and means for applying RF power to the electrodes to establish an electrical field between the mould parts sufficient to dielectrically heat a body of material between the electrodes to curing temperature.

The invention is further carried out by the method of compression moulding a polymer or polymer composite material in a mould having dielectric shear edges comprising the steps of: compressing a charge of polymer material in a mould cavity by telescopically moving mould parts together under pressure, dielectrically heating the charge by applying a radio-frequency voltage across the mould parts whilst maintaining the mould parts electrically isolated from one another to establish a radio-frequency field through the charge, and maintaining the charge under pressure at least until curing of the polymer is partially completed.

The above and other advantages of the invention will become more apparent from the following description taken in conjunction with the accompanying drawings wherein like references refer to like parts and wherein:

Figure 1 is a graph of degree of cure versus depth of a thermosetting resin part heated by thermal diffusion in a conventional heated mould,

Figure 2 is a schematic cross-sectional elevation of a compression mould in a press which is supplied by a source of radio-frequency energy according to the present invention,

Figure 3 is a graph of degree of cure versus depth of a thermosetting resin part heated by dielectric heating as well as by auxiliary heating,

Figure 4 is a schematic cross-sectional elevation of a compression mould according to another embodiment of the invention,

Figures 5 and 6 are front and side cross-sectional views, respectively, of a multi-cavity compression mould for dielectric heating according to another embodiment of the invention, Figure 5 being taken along line 5-5 of Figure 6 and Figure 6 being taken along line 6-6 of Figure 5, and

Figure 7 is an isometric view of an inner mould of the embodiment of Figures 5 and 6, the mould being loaded with a charge.

The ensuing description is directed to a mould design and a moulding process especially adapted to large parts and to parts made of re-inforced thermosetting resins or thermoplastic resins such as nylon-coated fibre rovings fused under pressure whilst being dielectrically heated. Very fast cycle times are possible with the thermoplastic material since it not only heats rapidly and retains uniform temperature throughout the cross-section but also once the radio-frequency energy (RF) is terminated the work-piece cools according to the material conductivity properties to mould material temperature to discharge the part. The terms "cure" and "curing" as used herein refer to the cross-linking reaction in thermoset material as well as to the fusing and solidifying of thermoplastic material.

A particular advantage of the mould disclosed herein is that it is an adaptation of conventional mould structures so that it fits in with existing designs and associated plant equipment thus allowing implementation in traditional plastics moulding facilities. The chief expenses would be the power supplies for the required radio-frequency energy and the dielectric shear edges.

Figure 2 shows schematically a mould cross-section having a lower mould half 10 comprising a body 12 made of tool steel, heating passages 14 extending through the steel body 12, and twb dielectric shear edges 16 bolted to the body 12. The shear edges 16 may be formed from a ceramic such as alumina or other dielectric material such as epoxy resin. The shear edges 16 may be inset in the body 12 or seated flush on the surface of the body 12. The space between the shear edges that is bounded by the body surface defines a mould cavity 18. An upper mould half 20 made of tool steel also has heating passages 14. The heating passages accommodate circulating steam or hot liquid to provide auxiliary heating of the mould.

Other auxiliary heating such as resistance heating cartridges may be used instead. The upper mould half 20 comprises a core which snugly fits between the shear edges 16 to press upon and contain any material or charge placed in the mould cavity 18. Thus the upper half 20 moves between the shear edges 16 to define an upper surface of the article shape whilst the cavity 18 defines the remainder of the article shape. The upper mould half 20 is connected to the high-voltage terminal of a radio-frequency (RF) power generator 22 to comprise a high-voltage electrode and the body 12 of the lower mould half 10 is grounded. Of course the polarities may be reversed. In any event, the conductive, steel portions of the mould halves never touch due to the dielectric shear edges 16 and the charge of dielectric material in the cavity. The upper mould half 20 is controllably supported by a press 24 which is electrically isolated from the mould by an insulator 26.

Preferably the shear edges are semi-lossy; that is, the power-loss factor of the shear edges 16 is smaller than that of the part so that it will heat to lower temperatures than the part. This can be accomplished by incorporating a lossy dopant in the dielectric material of the shear edges 16. The resin systems used for moulding materials often have a power loss factor which varies significantly with temperature. For example, one such system (resin plus catalyst) varies non-linearly over its temperature range and has a maximum power-loss factor of 0.7206 at 27°C, 0.2093 at 175°C, and a minimum of 0.1591 at 75°C. A semi-lossy material is considered to be one having a power-loss factor much less than the maximum power-loss factor of the moulding material or even less than the minimum thereof. It is preferred to use a shear edge material with such a system having a power-loss factor less than the minimum of the moulding material but sufficient to contribute meaningful heating. An epoxy resin having a power-loss factor of 0.144 is sufficient for use with the moulding material described above.

In operation, auxiliary heating is applied to the mould halves by passing a hot liquid through the passages 14 as in conventional moulds. The moulds are not heated sufficiently to provide the primary thermal energy to the plastic charge but enough to prevent a chilling effect on the surface of the part. If the mould were cold it would be a heat sink effective to cool the skin of the part so that it would not cure. The shear edges 16 are less of a heat sink if the dielectric edge material is a thermal insulator. However it is sometimes desirable to heat the shear edges. This is accomplished by using a lossy or semi-lossy material for the shear edges. Then the shear edges will generate some heat in the presence of the RF field fringe which extends beyond the bounds of the cavity.

When moulding material is placed in the cavity the upper mould half 20 is pressed down into the cavity by the press 24 to form a part 26′. The RF field is applied to heat the part. The part, of course must comprise a lossy material or include a lossy dopant to convert the electrical field energy to thermal energy. The heat energy is developed rapidly and uniformly throughout the part and is the primary external heat source. In the case of a thermoset material, the exothermal reaction of the resin provides additional heat, of course, and some heat is available from the mould and optionally from the shear edges. The graph of Figure 3 represents the progress of curing in this part. As in Figure 1, the lines represent the degree of curing throughout the part at different times. Initially the surface starts to cure first due to the heated mould. Later the degree of cure of the remainder of the part starts to catch up to the surface portion. The cure rate through the part is much more uniform than in the conventional heating case of Figure 1 and large temperature differences are avoided. Moreover, the total process is accomplished in a fraction of the time required in conventional heating.

During a moulding operation the applied pressure is of the order of 2068.43 kPa (300 psi). Thermoset materials have a reaction initiation temperature of approximately 85°C, and a mold temperature near the reaction initiation temperature is adequate. Using the dielectric heating process a leaf spring 152.4 cms (60 inches) long, 5.08 cms (2 inches) wide and 6.35 cms (2 1/2 inches) thick comprising fibre rovings coated with a thermoset resin can be cured in about 3 minutes. The same size leaf spring made of fibre rovings coated with a thermoplastic resin such as nylon fuses at a temperature of 290°C, requires a mould temperature of about 175°C, and also cures in about 3 minutes. The nylon first melts when the fusing temperature is reached and very quickly drops below that temperature to solidify when the RF field is removed. A smaller nylon composite part 1.905 cms (3/4 inch) thick and 5.08 cms (2 inches) wide was cured in 80 seconds.

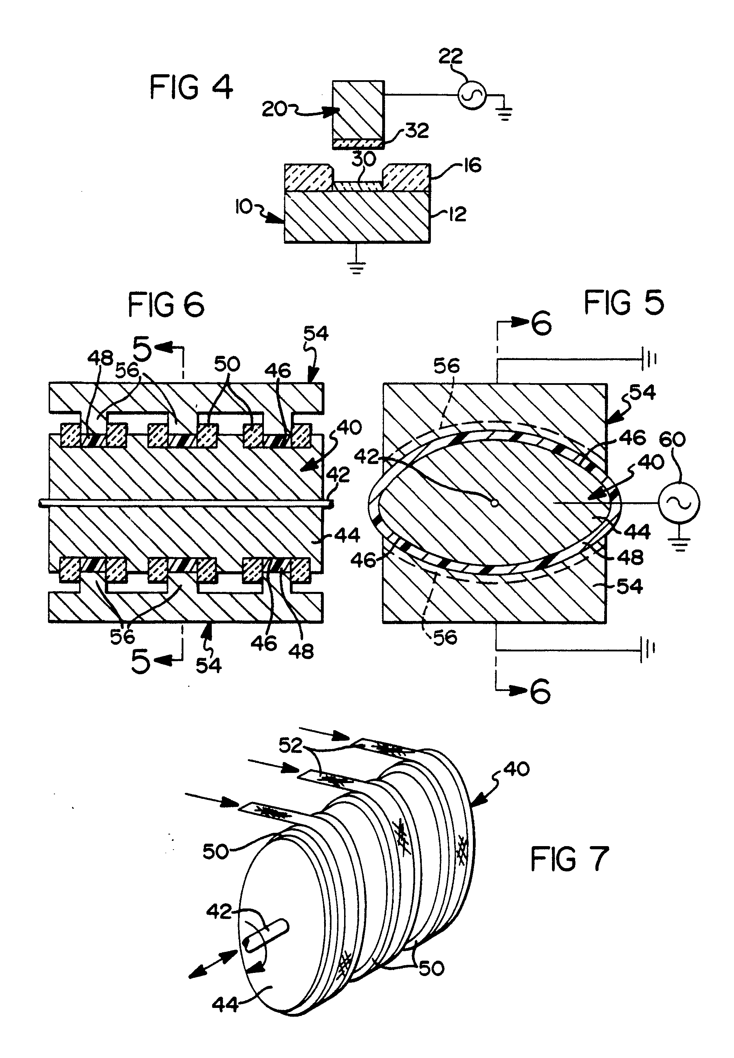

The auxiliary heat for the mould surface may be provided by a semi-lossy dielectric layer at the mould surface which, like the shear edges, generates heat when the RF field is applied during the moulding of a part. In Figure 4, the lower mould half 10 has a steel body 12 with no passages for a heating medium, dielectric shear edges 16 and a layer of dielectric material 30 on the body between the shear edges 16. The upper mould half 20 also has no heat passages but does have a layer 32 of semi-lossy dielectric material on the bottom of the mould half. The dielectric material 30, 32 is doped with sufficient lossy additives to heat the material the desired amount. Thus the part being moulded is surrounded by warm dielectric mould surfaces.

To mould parts having non-uniform thickness it is important to obtain uniform heating. This is accomplished by providing dielectric face material on the mould having a thickness variation complementary to the part thickness variation. Then the total dielectric thickness will be the same along the cavity resulting in a uniform electrical field through the part. Another approach to obtaining a uniform field is to judiciously connect the electrical supply leads to the mould or to use tuning stubs to control distribution of the electrical field standing wave. This is possible because the RF wavelength used will usually be comparable to the part length.

For high-capacity equipment, multiple mould cavities are conventionally used to make several parts per batch. This can also be done with dielectric heating and can be done better because of the speed and uniformity of heating. Figures 5 and 6 show a six cavity mould for producing leaf springs for trucks. A centre mould 40 mounted on an axle 42 for rotation has a generally elliptical or oval shape determined by the shape of the part. The mould 40 has a steel body 44 with two opposed mould faces 46 and three cavities 48 in each face. Dielectric shear edges 50 bound both sides of each cavity. Figure 7 is an isometric view of the inner mould 40 as rovings 52 are wound into the cavities. The rovings are supplied from reels and run through a bath of liquid epoxy resin in a conventional manner. The inner mould 40 is rotated whilst the mould is open and each roving is wound into an opposed pair of cavities. Two opposed outer moulds 54 are movably mounted for closing against the inner mould 40 and for opening to a position which allows the inner mould to rotate. The outer moulds have cores 56 which slidably fit between the shear edges 50 when the mould is closed, each core 56 having a surface shaped according to the outer surface of the part to be moulded. An RF generator has its high voltage terminal coupled to the inner mould whilst the outer moulds are grounded. The electrical connections may be made in the reverse manner, if desired. Thus the RF field is split into two paths and each path traverses three cavities in parallel.

## Claims

1. Apparatus for compressing and curing a resin object comprising: a pair of co-operating mould parts (10,20) for imparting a shape to a body of resin material to form the object, a pair of electrodes associated with the mould parts (10,20), and means (22) for applying radio-frequency (RF) power to the electrodes to establish an electrical field between the mould parts (10,20) sufficient to dielectrically heat said body of material between the electrodes to curing temperature, characterised in that each mould part (10,20) includes a conductive portion to serve as one of said electrodes, and at least one of the mould parts (10) has a shear edge (16) formed from a dielectric material, whereby the mould parts (10,20) can come into close contact whilst maintaining electrical isolation of the conductive portions thereof.

2. Apparatus according to claim 1, in which the mould parts (10,20) are heated by auxiliary means (14) to prevent cooling of the object surface during curing of the object.

3. Apparatus according to claim 1, in which the mould parts (10,20) comprise male and female mould parts, each having steel bodies and shaped to co-operatively form a cavity (18) for moulding said object, the female mould part (10) having said shear edge (16) in telescoping relation to the male mould part (20).

4. Apparatus according to any one of claims 1 to 3, in which the dielectric material of the shear edge (16) is a lossy material subject to heating by the electrical field to impart heat to the edges of the object.

5. Apparatus according to claim 3, in which the cavity-forming surfaces of the male and female parts (10,20) have respective layers (30,32) of lossy dielectric material adjacent the object which are subject to heating by the electrical field to maintain a desired temperature at the object surface during moulding.

6. Apparatus according to claim 1 or 2, in which the mould parts (10,20) define a shape of non-uniform thickness, and at least one of the mould parts has a face portion adjacent the cavity comprising a dielectric material having substantially the same dielectric constant as the material of the object and is shaped to compensate for object thickness variations so that all electrical field paths include substantially equal thicknesses of dielectric materials and all parts of the object are subject to the same degree of heating by the electrical field.

7. Apparatus according to claim 1, for simultaneously compressing and curing a plurality of polymer composite parts, said apparatus comprising: a female mould part (40) having two opposed faces (46) and a plurality of cavities (48) arranged side by side on each face (46), each cavity (48) being edged by electrically-insulating shear edges (50) and being adapted to receive material to be moulded; two male mould parts (54) on opposite sides of the female mould (40), each of which is registered with one of said faces (46) and having a plurality of cores (56), each of which slides between adjacent shear edges (50) into a respective cavity (48) to compress said material within the cavity (48), and means for coupling a source (60) of radio frequency energy to the mould parts (40,54) with one polarity on the female mould part (40) and the other polarity on the male mould parts (54) so that said electric field is established between the female mould part (40) and each of the male mould parts (54).

8. A method of compression-moulding a polymer or polymer composite material in a mould according to claim 1, characterised in that the method comprises the steps of: compressing a charge of polymer material in a mould cavity (18) by telescopically moving mould parts (10,20) together under pressure, dielectrically heating the charge by applying a radio-frequency voltage across the mould parts (10,20) whilst maintaining the mould parts (10,20) electrically isolated from one another to establish a radio-frequency field through the charge, and maintaining the charge under pressure at least until curing of the polymer is partially completed.

9. A method of compression-moulding a polymer or polymer composite material in a mould according to claim 8, in which the polymer material comprises a thermoplastics coating on a fibre roving (52), and the step of maintaining the charge under pressure comprises applying the pressure until the thermoplastics material is fused to consolidate the charge and the thermoplastics material is then allowed to cool and at least partially solidify.

10. A method of compression-moulding a polymer or polymer composite material in a mould according to claim 8, in which the polymer material comprises a thermosetting material re-inforced by fibre roving (520, and the step of maintaining the charge under pressure comprises applying the pressure until the thermosetting material is at least partially cross-linked to consolidate the charge.

# FIG 1

# FIG 3

# FIG 2

# FIG 4

# FIG 6

# FIG 5

# FIG 7